# EUROPÄISCHE PATENTSCHRIFT

(11) **EP 2 919 970 B1**
(45) Veröffentlichungstag und Bekanntmachung des Hinweises auf die Patenterteilung: **02.08.2017**
(21) Anmeldenummer: 13799202.0
(22) Anmeldetag: 18.11.2013
(51) Int. Cl.: B29C 70/46, B29C 35/00

(54) **VERFAHREN ZUM HERSTELLEN EINES BAUTEILS AUS EINEM FASERVERBUNDWERKSTOFF, PRESSFORMLING DAFÜR SOWIE BAUTEIL**
METHOD FOR PRODUCING A COMPONENT FROM A FIBRE COMPOSITE MATERIAL, PRESSING BLANK THEREFOR AND COMPONENT
PROCÉDÉ DE FABRICATION D'UN COMPOSANT À PARTIR D'UN MATÉRIAU COMPOSITE RENFORCÉ PAR DES FIBRES, ÉBAUCHE DE PRESSAGE POUR CE PROCÉDÉ, AINSI QUE COMPOSANT

(30) Priorität: 19.11.2012 DE 102012022476
(43) Veröffentlichungstag der Anmeldung: 23.09.2015
(73) Patentinhaber: Technische Universität München, 80333 München (DE)
(72) Erfinder: BOCKELMANN, Paul, 81245 München (DE); HÄFFELIN, Daniel, 81929 München (DE); DRECHSLER, Klaus, 83620 Feldkirchen-Westerham (DE)
(74) Vertreter: FDST Patentanwälte
(86) Internationale Anmeldenummer: PCT/EP2013/003466
(87) Internationale Veröffentlichungsnummer: WO 2014/075812

(56) Entgegenhaltungen:
- EP-A1- 2 495 099
- EP-A2- 0 904 930
- DE-A1- 3 536 272
- US-A- 4 028 477

## Beschreibung

Die Erfindung betrifft ein Verfahren zum Herstellen eines Bauteils aus einem Faserverbundwerkstoff, wobei ein Fasermaterial mit einem flüssigen Harz getränkt und zu dem fertigen Bauteil ausgehärtet wird. Die Erfindung betrifft weiter einen das Fasermaterial umfassenden Pressformling, der zur Herstellung des Bauteils herangezogen wird. Ebenso betrifft die Erfindung ein entsprechend hergestelltes Bauteil aus einem Faserverbundmaterial. Die Erfindung beschäftigt sich weitestgehend mit dem Thema, die Zykluszeit zur Herstellung eines Bauteils aus einem Faserverbundwerkstoff zu verkürzen.

Im Unterschied zu einem homogenen Werkstoff, wie zum Beispiel einem Metall oder einer Legierung, der in Gestalt eines Halbzeugs gelagert und bei Bedarf zu einem Bauteil verarbeitet wird, findet die maßgebliche Entstehung eines Faserverbundwerkstoffes erst während der Verarbeitung seiner Einzelteile zur Herstellung eines gewünschten Bauteils statt. Durch die nicht oder nur sehr schwer trennbaren Einzelschritte der Werkstoffentstehung und der Bauteilformgebung, sowie aufgrund der unterschiedlichen Handhabung der sich in ihren stofflichen Eigenschaften unterscheidenden Einzelbestandteile sind die Herstellung und die Verarbeitung von Faserverbundwerkstoffen vergleichsweise arbeits- und kostenintensiv.

Ein Faserverbundwerkstoff besteht aus einem Anteil Fasern und aus einem Anteil Matrix. Zur Herstellung ist es üblich, vor der Zusammenkunft von Matrix und Fasern, beispielsweise durch Infusion oder Injektion eines flüssigen Harzes, einen trockenen Vorformling aus Fasern herzustellen, der der Endkontur des Bauteils nahe kommt. Dieser wird auch als Preform bezeichnet. Das Herstellen einer Preform erfolgt unter anderem durch das Aufschichten ebener Faserhalbzeuge, die unter Druck und Temperatur in eine endgeometrieähnliche Form gepresst werden können. Anschließend wird das flüssige Harz der Matrix und damit das vorgefertigte Bauteil ausgehärtet.

Als Matrixmaterial können Duroplaste verwendet werden, die sich aus mehreren Komponenten zusammensetzen können. Typische Vertreter sind epoxid-, vinyl-, polyester- und vinylbasierte Harzsysteme. Diese weisen eine Härtereaktion auf, die unter Raumtemperatur oder höheren Temperaturen stattfindet. Grundsätzlich ist es auch möglich, als Matrixmaterial Thermoplaste einzusetzen.

Das angegebene Verfahren weist Defizite in der Effizienz der eingesetzten Hilfsmittel und dem Ablauf der Prozessschritte auf, da für das Pre-Forming, das Auftragen eines Trennmittels, die Injektion/Infiltration, den Aushärteprozess, die anschließende Nachbearbeitung der Oberfläche und das Reinigen des Werkzeuges jeweils eigene Prozessschritte erforderlich sind. Insbesondere stellt die Vorkonfektionierung der Preform, wobei Faserstränge und Faserlagen zusammengefasst, die Faserlagen bauteilspezifisch aufgeschichtet und fixiert sowie das entstehende Lagenpaket anschließend entsprechend der gewünschten Bauteilform geformt werden muss, ein kosten- und arbeitsintensives Verfahren dar. Auch der Pressvorgang der Preform unter Hitze und Druck zur Formgebung, wobei zugleich flüssiges Harz eingebracht wird, ist sehr aufwendig. Die wiederkehrende Handhabung und Ablegung der Fasermaterialien und der hohe Anteil an manueller Arbeit macht den Herstellungsprozess insgesamt sehr teuer.

Zur industriellen Fertigung von Bauteilen aus einem Faserverbundwerkstoff hat sich insbesondere das RTM-Verfahren (engl.: Resin Transfer Moulding) durchgesetzt. Hierbei wird der Vorformling in eine entsprechend ausgeformte Pressenkavität eingelegt und anschließend durch das Schließen einer zweiten Pressenhälfte unter Formgebung kompaktiert. Anschließend wird die Kavität evakuiert und das flüssige Harz des Matrixwerkstoffs durch eine Injektion in das Fasermaterial eingepresst. Beim RTM-Verfahren kann auf die Verwendung eines sogenannten Prepregs, d.h. eines mit Harz getränkten, nassen Vorformlings, verzichtet werden. Die Formgebung, Tränkung und Aushärtung des Bauteils kann in einem Arbeitsgang innerhalb der Presse erfolgen.

Durch die Kompaktierung des Vorformlings wird jedoch die Tränkbarkeit des Fasermaterials herabgesetzt, was sich negativ auf die Tränkungszeit und somit auf die Prozesszeit sowie auf die realisierbare Geometriekomplexität der Bauteile auswirkt. Da dieTränkung des Fasermaterials durch Injektion in Bauteillängsrichtung mit entsprechend langen Fließwegen stattfindet, muss das flüssige Harz mit hohem Druck in die Pressenkavität eingebracht werden. Die einzusetzenden Werkzeuge müssen den resultierenden hohen Schließkräften standhalten und zudem eine ausreichende Dichtigkeit gewährleisten. Dadurch werden die Investitionskosten für eine RTM-Anlage hoch. Auch die vergleichsweise langen Belegungszeiten in einer Pressenkavität führen zu einer negativen Beeinträchtigung der Wirtschaftlichkeit.

Zur Verbesserung der Prozessführung wird in einem abgewandelten RTM-Verfahren der Vorformling innerhalb der Pressenkavität vor einem Schließen der Presse zunächst mit dem flüssigen Harz versorgt. Im daran anschließenden Pressvorgang wird das flüssige Harz infolge des Druckes durch das Werkzeug in dem Vorformling in Dicken- und in Längenrichtung verteilt. Durch den abgewandelten Tränkungsprozess werden gegenüber dem RTM-Verfahren kürzere Tränkungszeiten erreicht. Im unkompaktierten Zustand ist der Vorformling für das flüssige Harz durchlässiger. Durch das Fließen in Dicken- und in Längsrichtung ist der zur Tränkung erforderliche Fließweg des Harzes verkürzt. Zudem ermöglicht dieses Verfahren eine Reduktion des Funktionsumfanges der Presse, da das flüssige Harz nicht unmittelbar in das Werkzeug bzw. in die Pressenkavität eingebracht werden muss, sondern auch außerhalb des Werkzeuges dem Vorformling bzw. der Preform zugeführt werden kann.

Bei diesem abgewandelten RTM-Verfahren entstehen jedoch häufig schlechte Bauteileigenschaften. Durch das vorgeschaltete Auftragen des Harzes dringt dieses an höher permeablen Stellen in den Vorformling ein. Hieraus resultiert beim Verpressen des Bauteils ein unkontrollierter Harzfluss. Im Vorformling enthaltene Gaseinschlüsse können durch das eingedrungene Harz während des Pressens nunmehr teilweise entweichen. Dies führt zu Fehlstellen innerhalb der Matrix des fertigen Bauteils. Zudem führt der vorgeschaltete Auftrag des flüssigen Harzes zu einem Reinigungsmehraufwand.

In einer anderen Variante des RTM-Verfahrens wird bei eingelegtem Vorformling die Pressenkavität geschlossen, wobei jedoch zwischen Vorformling und Werkzeug ein Spalt verbleibt. Vor der Injektion des Harzes und vor dem Verpressen wird die Pressenkavität abgepumpt, so dass Gasrückstände vor Tränkungsbeginn entfernt werden können. Weiterhin erfolgt der Tränkungsprozess ebenfalls im unkompaktierten Zustand des Vorformlings. Das Harz wird in den Spalt injiziert und verteilt sich in diesem. Anschließend wird durch Zufahren des Werkzeugs das Harz in Preformdickenrichtung verpresst. Bei diesem sogenannten Spalt-RTM-Verfahren entsteht kein erhöhter Reinigungsbedarf. Durch den unkontrollierten Harzfluss sind jedoch der Bauteilkomplexität Grenzen gesetzt.

Die komplexe und aufwändige Herstellung eines Bauteils aus einem Faserverbundwerkstoff verhindert einen weitgreifenden Einsatz dieser Werkstoffart in vielen Industriebereichen. Während für Hochtechnologieanwendungen mit meist kleinen Stückzahlen die Kosten für den Einsatz des leichten und mechanisch sehr stabilen Faserverbundwerkstoffs gerechtfertigt werden können, verbietet der hohe Kostendruck in vielen Bereichen, in denen hohe Stückzahlen produziert werden, wie zum Beispiel in der Sportartikelindustrie, in der Medizintechnik, in der Schienenverkehrstechnik und in der Automobiltechnik, eine Erweiterung ihres Einsatzes. Insbesondere in Hochlohnländern sind viele produzierende Industrien auf hochautomatisierte Anlagen und Verfahren angewiesen, um qualitativ hochwertige Produkte wirtschaftlich fertigen zu können.

EP-A-0904930 offenbart als Träger zur Speicherung von flüssigem Harz ein permeables, faseriges Material oder ein offenzelliges Flachmaterial, insbesondere in Form eines Schaums. Alle diese beschriebenen Stoffe besitzen zum Speichern des flüssigen Harzes eine offen-poröse Struktur. Zur Imprägnierung der im Ausgangszustand trocken vorliegenden Fasermaterialien werden die genannten Speichermaterialien unter elastischer Deformation komprimiert, wodurch der gespeicherte Kunststoff oder das gespeicherte Harz aus den komprimierten Poren austritt.

Mit den genannten, gegenwärtig favorisierten Verfahren zur Herstellung von Bauteilen aus einem Faserverbundwerkstoff können die Produktionskosten für Bauteile mit ausreichender Qualität nicht weiter reduziert werden. Ohne umfassende Verfahrensvariationen ist keine genügend wirtschaftliche Fertigung zu erwarten. Der vorliegenden Erfindung liegt daher die Aufgabe zugrunde, ein Verfahren zur Herstellung eines Bauteils aus einem Faserverbundwerkstoff anzugeben, welches eine vergleichsweise kostengünstige und großserientaugliche Fertigung ermöglicht. Eine weitere Aufgabe ist es, einen Pressformling für ein derartiges Herstellungsverfahren zur Verfügung zu stellen. Ferner liegt der Erfindung die Aufgabe zugrunde, ein möglichst wirtschaftlich herstellbares Bauteil aus einem Faserverbundwerkstoff anzugeben.

Die erstgenannte Aufgabe wird erfindungsgemäß gelöst durch ein Verfahren zum Herstellen eines Bauteils aus einem Faserverbundwerkstoff, wobei ein flüssiges Harz in eine Anzahl von Kavitäten eines Trägers eingebracht wird, wobei dem Träger unter Ausbildung eines Pressformlings ein trockenes Fasermaterial aufgebracht wird, wobei der das Fasermaterial und den Träger umfassende Pressformling unter Druckeinwirkung umgeformt wird, wobei die Kavitäten des Trägers infolge der Druckeinwirkung kollabieren und das flüssige Harz unter Tränkung des Fasermaterials freisetzen, und wobei der Pressformling mit dem getränkten Fasermaterial zu dem fertigen Bauteil ausgehärtet wird, wobei sich der Träger dauerhaft mit dem Fasermaterial verbindet.

Die einzelnen Herstellungsschritte müssen dabei nicht zwangsläufig in der angegebenen Reihenfolge ablaufen. Vielmehr kann die Abfolge auch sinnhaft variiert werden.

Die Erfindung geht dabei in einem ersten Schritt von der Überlegung aus, dass sich bei den bekannten Herstellungsverfahren die Prozesszeiten für die Tränkung und die Aushärtung nicht unabhängig voneinander verkürzen lassen. Während eine Temperaturerhöhung bei der Tränkung aufgrund der hierdurch erniedrigten Viskosität des Harzes zu höheren Fließgeschwindigkeiten und somit zu einer rascheren Durchtränkung des Fasermaterials führt, steigt andererseits durch die Temperaturerhöhung der Reaktionsumsatz des Vernetzungsprozesses. Letzteres führt zu einer rascheren Aushärtung und somit zu einer unerwünschten Verkürzung der für die Tränkung zur Verfügung stehenden Zeit. Somit stehen niedrigere Temperaturen zum Erhalt einer möglichst langen Tränkungszeit im Widerspruch zu hohen Temperaturen zum Erreichen einer möglichst kurzen Aushärtungszeit. Andererseits führen hohe Druckgradienten zum Einbringen des flüssigen Harzes zwar zu gewünscht kurzen Tränkungszeiten. Gleichzeitig führen hierdurch erzeugte hohe Fließgeschwindigkeiten des Harzes jedoch durch Gaseinschlüsse zu einer unerwünschten Porosität im fertigen Bauteil. Zudem können hohe Fließgeschwindigkeiten zu einer unerwünschten Verschiebung des Fasermaterials führen, die dauerhaft im fertigen Bauteil verbleibt.

In einem zweiten Schritt erkennt die Erfindung, dass der genannte Widerspruch dadurch aufgelöst werden kann, dass der Eintrag des flüssigen Harzes in das Fasermaterial über einen Träger erfolgt. Wird für das zu tränkende Fasermaterial ein Träger mit Kavitäten bereitgestellt, so können diese Kavitäten losgelöst vom Press- und Aushärteprozess bei vergleichsweise niedrigen Temperaturen, insbesondere bei Raumtemperatur, mit dem flüssigen Harz des Matrixmaterials befüllt werden. Hierdurch kann Zykluszeit eingespart und der Gesamtprozess stabilisiert werden. Aufgrund des bei niedrigen Temperaturen langsameren Reaktionsumsatzes des flüssigen Harzes ist eine Verarbeitbarkeit des Trägers über mehrere Minuten bis Stunden sichergestellt. Unter Auflage eines trockenen Fasermaterials auf den Träger wird für die nachfolgenden Arbeitsschritte ein Pressformling bereitgestellt, der für eine optimale Pressenauslastung vorbereitet werden kann. Dies ermöglicht eine Pufferung anderer Prozessschwankungen.

Der Pressformling als solcher wird dem nachfolgenden Umformprozess durch Druckeinwirkung unterzogen. Durch die Druckeinwirkung während der Umformung des Pressformlings kollabieren die Kavitäten des Trägers, wodurch das flüssige Harz aus dem Träger in das Fasermaterial eintreten kann. Da das Harz aus dem Träger unmittelbar in das Fasermaterial eintreten kann, resultieren kurze Tränkungswege, so dass zur Tränkung eine vergleichswiese niedrige Druckdifferenz erforderlich ist. Zudem wird das Geschwindigkeitsprofil der Harzfront während der Schließbewegung der Pressenkavität überwiegend konstant gehalten, wodurch die Homogenität des Bauteils verbessert wird. Der Pressformling und damit das in ihm enthaltene Harz erhitzen sich in unmittelbarem Kontakt mit dem Werkzeug. Infolge der kurzen Fließwege wird wenig Zeit für den Tränkungsvorgang benötigt, so dass die Aushärtung des Harzes durch Erwärmung des Pressformlings über das Werkzeug unmittelbar mit dem Pressvorgang erfolgen kann. Infolge der Ver-ringerung der Fließwege des Harzes wird neben der Zykluszeit aber auch Zuhaltekraft in der Pressenkavität eingespart. Insofern ergibt sich die Möglichkeit, bei gleicher Zuhalte- oder Schließkraft des Werkzeugs auch höher viskose Harze und/oder für Harze weniger durchlässiges Fasermaterial zu verarbeiten.

Es wird somit ersichtlich, dass sich die Zykluszeit zur Herstellung eines Bauteils aus einem Faserverbundwerkstoff durch die angegebene neue Verfahrensweise beträchtlich verkürzen lässt. Über eine lokale Verteilung der Kavitäten sowie über eine insbesondere lokal variierende Dimensionierung der Kavitäten lassen sich im Übrigen auch komplexe Bauteilgeometrien realisieren.

Die Erfindung bietet darüber hinaus die Möglichkeit einer zeitlichen und/oder räumlichen Modularisierung der Produktion, wenn der mit Harz befüllte Träger und/oder der Träger mit aufgebrachtem Fasermaterial (als Pressformling) als solcher transportstabil ausgestaltet wird. Des Weiteren stellt der Träger sowohl ein Fertigungsmittel als auch eine funktionale Komponente dar, was eine abfallfreie Prozessindikation bedeutet.

Ferner ist der Träger nach dem Aushärteprozess dauerhaft als Oberfläche dem fertigen Bauteil angebunden. Die Anbindung des Trägers an das Fasermaterial ist hierbei durch eine Adhäsion gegeben. Diese Adhäsion resultiert unter anderem aus einer mechanischen Verankerung, wobei Vertiefungen des Trägers während der Tränkung vom flüssigen Harz durchdrungen werden, wodurch im ausgehärteten, festen Zustand Hinterschneidungen gebildet sind. Andererseits können sich abhängig von der Wahl des Trägermaterials auch Polymerketten des Trägers, der Matrix und/oder des Fasermaterials aufeinanderlegen oder sich gegenseitig durchdringen, so dass der Träger durch zwischenmolekulare Kräfte als Oberfläche gehalten wird.

Über das Trägermaterial ist zudem eine Oberfläche des fertigen Bauteils definiert. Dies ermöglicht es, dem Bauteil über die Wahl des Trägermaterials optimierte und gewünschte Oberflächeneigenschaften zu geben. Beispielsweise kann über den Träger eine unerwünschte Sichtbarkeit der Faserstruktur vermieden werden. Andererseits kann über den Träger eine zu einer Weiterbehandlung des Bauteils mittels Besprühen, Beschichten, Lackieren oder Bestreichen günstige Eigenschaft wie Oberflächenrauhheit, Saugfähigkeit und/oder Haftfähigkeit vermittelt werden. Auch können über das Material des Trägers dem fertigen Bauteil spezifische Oberflächeneigenschaften wie Härte, Haptik, Farbgebung etc. zugewiesen werden. Das Material des Trägers kann insbesondere derart ausgewählt sein, dass durch Prozessierung mit einem bestimmten Harzsystems eine isolierende Wirkung hinsichtlich elektrischen Stroms, Umgebungsmedien oder Wärme/Kälte erzeugt wird, tribologische Eigenschaften der betreffenden Oberfläche, zum Beispiel durch geeignete Additive, erzeugt werden, vorab bedruckte Dokumentationen, die später sichtbar sind, erzeugt werden, das Bauteil brandgeschützt ausgeführt ist oder eine Kombination aus den genannten Eigenschaften erreicht wird.

Das Material des Trägers muss lediglich so gewählt werden, dass es unter den im Pressvorgang eingesetzten Drücken ausreichend komprimiert werden kann, so dass die Kavitäten kollabieren und das flüssige Harz für die Tränkung des Fasermaterials freigeben.

Bevorzugt wird ein Träger mit einer Mehrzahl von lokal an- und/oder eingeformten Kavitäten verwendet. Über eine lokale An- und/oder Einformung von Kavitäten kann die Verteilung des flüssigen Harzes im Träger an die Bauteilgeometrie angepasst werden. Insbesondere kann neben der lokalen Verteilung auch die Geometrie der an- und/oder eingeformten Kavitäten an die Bauteilgeometrie angepasst werden. Zur Bildung der Kavitäten kann der Träger als solcher beispielsweise gefaltet, gewellt oder gebogen werden. Andererseits können die Kavitäten in den Träger auch eingesenkt oder eingepresst werden. Im ersteren Fall bildet der Träger gewissermaßen die Wandbereiche der Kavitäten. Im letzteren Fall sind die Kavitäten beispielsweise als Mulden oder als eingebrachte Vertiefungen wie Nuten, Kerben, Sicken, Senken oder dergleichen ausgestaltet. Derartige Kavitäten werden im Folgenden auch als Makrokavitäten bezeichnet. In den Makrokavitäten wird das flüssige Harz insbesondere durch Gravitation und nicht infolge einer Kapillarität gespeichert. Solche Makrokavitäten können gegenüber dem Fasermaterial auch durch eine dünne Schicht abgeschlossen werden, die bei Überschreitung eines gewissen Druckes zerstört und somit durchlässig für das Harz wird, so dass dieses in das Fasermaterial eindringen kann.

Werden sehr komplexe Bauteile hergestellt, deren Formgebung nicht während des Schließens des Presswerkzeugs geschieht, so wird bevorzugt ein Träger eingesetzt werden, dessen Form der Geometrie des Endbauteils entspricht oder darauf angepasst ist. Dazu ist es zweckmäßig, wenigstens lokal verschlossene Kavitäten vorzusehen, um ein gravitationsbedingtes Herausfließen des flüssigen Harzes aus dem Träger zu verhindern.

Vorteilhafterweise sind die an- und/oder eingeformten Kavitäten, also insbesondere die Makrokavitäten, jedoch wenigstens in einer Ausbreitungsrichtung des Trägers, insbesondere in Trägerlängsrichtung, geschlossen. Durch einen solchen Abschluss wird verhindert, dass das gespeicherte Harz bei Druckbeaufschlagung entlang der Kavitäten fließt und erst verzögert in das Fasermaterial eindringt. Solche Kavitäten können diskret, also einzeln und nicht in Fluidkommunikation miteinander stehend, eingebracht sein. Sie können jedoch innerhalb gewisser Grenzen auch innerhalb des Trägers miteinander verbunden sein. Die Kavitäten gemäß dieser Ausführungsform enden jedoch wenigstens in einer Richtung innerhalb des Trägers.

In einer weiter vorteilhaften Ausführungsvariante wird die geometrische Form der Kavitäten des verwendeten Trägers auf ein gewünschtes Fließverhalten, insbesondere auf die Fließrichtung und die Fließart, des flüssigen Harzes während des Tränkungsprozesses eingestellt. Hierdurch wird insbesondere auf die Form und/oder auf das Material des Fasermaterials konkret Bezug genommen.

Weiterhin ist es möglich, das Material des Trägers mit anderen Materialien wie zum Beispiel mit Metallen, Kunststoffen oder Keramiken zur Erzeugung gewünschter Eigenschaften wie insbesondere einer erhöhten Festigkeit, Verformbarkeit etc. zu kombinieren. Ferner kann der Träger auch aus einer oder mehreren Materiallagen bestehen, wobei die Kavitäten durch eine einzelne Lage oder durch die Fügung von mehreren Lagen hergestellt werden. Schließlich kann der Träger als solcher auch einteilig oder mehrteilig ausgebildet sein. Wird für das Material des Trägers ein Thermoplast verwendet, so kann das Bauteil mittels Thermoformen technisch vergleichsweise einfach geformt werden. Insbesondere ist ein reversibles Verformen möglich.

In einer bevorzugten Ausgestaltung wird für den Träger eine Kombination aus einem faserbasierten Material und einem faserfreien Material verwendet. Eine solche Kombination ermöglicht für das herzustellende Bauteil eine örtliche Trennung verschiedener Funktionen, wie z.B. Dichtung, Harzspeicherung oder Positionierung des Fasermaterials, oder eine zeitliche Trennung verschiedener Funktionen, wie z.B. die Formgebung der Kavitäten zur Harzspeicherung sowie anschließend die Verpressung der Kavitäten zur Tränkung.

Zweckmäßigerweise wird ein endkonturnah geformter Träger verwendet. Hierdurch ist zum einen die Handhabung und der Transport erleichtert, da durch eine Verformung im Raum eine gewisse Eigenstabilität des Trägers erreicht wird. Ist der Träger form- und transportstabil ausgebildet, so bleibt das flüssige Harz im statischen oder dynamischen Zustand (während des Transports) sicher in den Kavitäten gespeichert. Über eine endkonturnahe Anformung des Trägers ist zum anderen die zum späteren Verpressen geforderte Geometrietreue gewährleistet. Der insbesondere transportstabile Träger kann auch derart ausgeformt sein, dass er das aufgebrachte Fasermaterial zumindest abschnittsweise umgreift oder umfasst, wodurch sich die Transportstabilität des Pressformlings erhöht.

Zusätzlich kann der Träger in einer Weiterbildung vorteilhaft auch noch derartig ausgebildet sein, dass eine Positionierung von Endeffektoren (beispielsweise an Roboterarmen oder dergleichen) über entsprechende Geometrien die Handhabung des Pressformlings erleichtert.

Zweckmäßigerweise wird das Fasermaterial dem Träger unter Erhalt eines trägerseitigen Randüberstands aufgebracht, der zu einer Positionierung des Pressformlings und/oder als Dichtelement während der Druckeinwirkung eingesetzt wird. Bei der letztgenannten Ausgestaltung dient der Träger in den Randbereichen als Einweg-Dichtmaterial im Pressprozess. Hierdurch können aufwändige Dichtungswechsel von herkömmlichen Dichtungen in den Presskavitäten bzw. Werkzeugen gänzlich vermieden werden.

Vorteilhafterweise werden auf den Träger, insbesondere nach dem Befüllen der Kavitäten, eine harzundurchlässige Grenzschicht, ein Haftvermittler, Hilfsstoffe und/oder Füllstoffe aufgebracht. Eine harzundurchlässige Grenzschicht kann vor dem Befüllen der Kavitäten auf den Träger aufgebracht werden, um beispielsweise ein vorliegend unerwünschtes Tränken des Trägers mit dem Harz zu vermeiden. Eine derartige Grenzschicht kleidet dann insbesondere auch die Kavitäten des Trägers aus. Andererseits kann eine harzundurchlässige Grenzschicht auch nach dem Befüllen aufgebracht werden. Mit einer solchen Grenzschicht werden die harzgefüllten Kavitäten verschlossen und somit transportsicher gemacht. Beim Pressvorgang platzt diese beispielsweise als Membran ausgebildete Grenzschicht auf und gibt das flüssige Harz frei. In einer anderen Variante platzt die Grenzschicht, insbesondere bei einem mit Harz getränkten Trägermaterial, nicht auf, sondern es wird das flüssige Harz während des Pressvorgangs durch die Grenzschicht hindurch in das Fasermaterial gepresst. Die Grenzschicht kann insbesondere als eine Diffusionssperre gegeben sein. Andererseits kann dem Träger ein Haftvermittler aufgebracht werden, der eine verbesserte Anhaftung des Fasermaterials ermöglicht. Ein solcher Haftvermittler ist beispielsweise so ausgewählt, dass er durch eine Erwärmung als flüssige Phase sich mit dem Harz des Matrixmaterials vermischt oder in das Fasermaterial eindringt. Nach dem Aushärten ist hierdurch eine dauerfeste, durch Formschluss unlösbare Verbindung entstanden. Als Haftvermittler wird bevorzugt ein Kunststoff, ausgewählt aus der Gruppe, die EVA (Etyhlenvinylacetat), PCP (Polychlorierte Biphenyle), APAO (Amorphe Polyalphaolefine), TPE-U (Thermoplastische Elastomere auf Urethanbasis), TPE-E (Thermoplastische Copolyester), TPE-A (Thermoplastische Copolyamide) und PE (Polyethlyen) enthält, oder eine Kombination hiervon verwendet.

Durch zusätzlich aufgebrachte Hilfs- und/oder Füllstoffe können die Eigenschaften des ausgehärteten Bauteils positiv beeinflusst werden. Beispielsweise kann dem Träger vor oder nach der Befüllung ein Trennmittel aufgebracht werden, wodurch das fertige Bauteil leichter vom metallischen Werkzeug abgelöst werden kann. Als Hilfsstoffe können dem Träger auch Harzadditive aufgebracht werden, die das Harz im Hinblick auf seine gewünschten Eigenschaften modifizieren. So kann mit derartigen Additiven beispielsweise die Brennbarkeit des Harzes herabgesetzt oder sein Schrumpfungsverhalten verbessert werden.

Als Füll- und/oder Hilfsstoffe können beispielsweise Thermoplastpartikel, IPN, Elastomere, Flüssigkautschuk, Siliziumdioxid, Titanoxid, Aluminiumoxid, Dendrimere oder Kombinationen hieraus zur Erhöhung der Schlagzähigkeit und Festigkeit bzw. Steifigkeit des fertigen Bauteils, Siliziumoxid und/oder Böhmit zur Ver-ringerung der Schrumpf- oder Wärmeausdehnung sowie zur Einstellung der Druckeigenschaften, ATH, Magnesiumhydroxid, Organophosphor, halogenierte Derivate, Schichtsilikate, POSS, nanoskaliges ATH oder eine Kombination hiervon zur Herstellung einer Brandsicherheit aufgebracht werden. Die vorgenannten Stoffe sind auch beliebig miteinander kombinierbar.

Weitere Hilfs- und/oder Füllstoffe können zur Veränderung der thermischen und elektrischen Leitfähigkeit oder zur Beeinflussung der Viskosität des Harzes aufgebracht werden.

Die Hilfs- und Füllstoffe lassen sich herkömmlich als Partikel beliebig geeigneter Größe einsetzen. Insbesondere können die Hilfs- und Füllstoffe auch als nanoskalige Partikel aufgebracht sein.

In einer weiter bevorzugten Ausgestaltung wird das trockene Fasermaterial in Form von Lagen auf den Träger aufgebracht. Dazu werden die Fasern fixiert und zusammengefasst zu Lagen verarbeitet. Die einzelnen Lagen werden dann beispielsweise zu dem Fasermaterial geschichtet. Insbesondere werden hierbei sogenannte gerichtete Endlosfasern eingesetzt, die sich über die gesamte Bauteillänge in der jeweiligen Faserlängsrichtung erstrecken. Zur Erreichung möglichst hoher, und zum Teil auch richtungsspezifischer Bauteilfestigkeiten bei minimalem Bauteilgewicht ist der Einsatz derartiger gerichteter Endlosfasern bevorzugt. Zur Schichtung des Fasermaterials können die Lagen insbesondere zueinander verdreht geschichtet werden.

Zweckmäßigerweise werden für die Lagen des Fasermaterials Einzelfasern, ein Fasergewebe, ein Fasergewirke, ein Faserpapier, ein Fasergestricke und/oder ein Fasergelege verwendet.

Bevorzugt wird das trockene Fasermaterial zueinander und/oder auf dem Träger fixiert. Das trockene Fasermaterial kann mit dem Träger formschlüssig, kraftschlüssig, reibschlüssig oder stoffschlüssig verbunden werden. Wie bereits erwähnt, kann das trockene Fasermaterial dem Träger jedoch auch nur lose aufgelegt werden. Als Fasermaterial kann insbesondere ein fixierter Lagenaufbau eingesetzt werden. Bevorzugt können hierbei die einzelnen Lagen lokal oder abschnittsweise aneinander fixiert sein, wobei die Umformbarkeit des Stapels zu der gewünschten Endgeometrie des fertigen Bauteils weiter gegeben ist, ohne aufgrund der Fixierung wellig oder faltig zu werden. Mit anderen Worten lässt eine derartige Fixierung noch einen für die Drapierbarkeit bezüglich der Bauteilgeometrie notwendigen Versatz, ein Abgleiten oder ein Abscheren der Fasern im Fasermaterial zu. Die Fixierung des Fasermaterials bzw. der Lagen des Fasermaterials bzw. der Lagen des Trägermaterials untereinander kann durch ein lokales Vernähen, lokales Verkleben, lokales Nadeln, lokales Heften oder durch eine lokale Zwischenlage eines Klebematerials geschehen.

Andererseits kann durch die Verwendung eines trockenen, unfixierten Fasermaterials der aufwändige Prozessschritt eines Vorformens eingespart werden. Das entsprechende Konfektionieren findet dann in einfacher Art und Weise durch die Positionierung der Lagen bzw. des Fasermaterials auf dem Träger statt. Die endgültige Formgebung des Pressformlings wird dann während der Druckeinwirkung in der Pressenkavität vorgenommen.

Bevorzugt sind als Fasern des Fasermaterials Glasfasern, Kohlenstofffasern, Naturfasern, thermoplastische Kunststofffasern und/oder Aramidfasern, insbesondere in Form von gerichteten Endlosfasern, verwendet. Damit kann Bezug genommen werden auf die späteren charakteristischen Eigenschaften des gewünschten Faserverbundbauteils. Das Fasermaterial selbst ist bevorzugt textil ausgebildet, wobei die Fasern zu einem Fasergewebe, einem Fasergewirke, einem Fasergestricke und/oder zu einem Faservlies miteinander verbunden sind. Alternativ ist auch die Verwendung eines Faserpapiers möglich. Letzteres unterscheidet sich von einem Faservlies, wobei Fasern ungeordnet beispielsweise durch Nadeln miteinander verbunden sind, durch die feinere Struktur der Fasern und durch die durch Pressung erzeugte innere Oberfläche.

Vorteilhafterweise wird als flüssiges Harz des Matrixmaterials ein Harz eines Duroplasten und/oder eines Thermoplasten und/oder ein Mehrkomponenten-Harzsystem eingesetzt. Es können sowohl raumhärtende als auch durch Erwärmung aushärtende Harzsysteme eingesetzt werden. Insbesondere können auch selbsthärtende Harzsysteme aus einem Harzmaterial und einem Härter verwendet werden. Für einen Duroplasten können insbesondere ein Epoxid-Harz, ein Polyester-Harz, ein ABS (Acrylnitril-Butadien-Styrol-Harz), ein Aminoplast oder ein Vinyl-, Phenol- oder Polyurethanharz eingesetzt werden.

In einer bevorzugten Weiterbildung werden die Kavitäten des Trägers mit verschiedenen Harzen befüllt. Hierdurch kann Bezug genommen werden auf eine spezifische Bauteilgeometrie oder auf am fertigen Bauteil gewünschte, lokal verschiedene physikalische, mechanische oder chemische Eigenschaften. Auch können den flüssigen Harzen in verschiedenen Kavitäten unterschiedliche Hilfs- und/oder Füllstoffe beigemengt werden.

Im Falle von lokal verteilten Makrokavitäten können diese mit dem Harz durch Injektion einzeln, zugleich oder zeitlich abfolgend mit dem flüssigen Harz befüllt werden. Alternativ können die einzelnen Makrokavitäten mittels eines Schlauchsystems unter Druck befüllt werden. Im Falle von Mikrokavitäten in Mikroporen oder Kapillaren des Trägers können diese durch Tauchen oder Besprühen mit flüssigem Harz befüllt werden. Das Befüllen der Mikrokavitäten ist auch durch eine Injektion möglich.

Die eingangs genannte Aufgabe wird erfindungsgemäß weiter durch ein Bauteil aus einem Faserverbundwerkstoff gelöst, welches insbesondere nach dem vorbeschriebenen Verfahren hergestellt ist. Ein solches Bauteil umfasst ein in ein ausgehärtetes Matrixmaterial eingebundenes Fasermaterial sowie einen unmittelbar als Oberfläche angebundenen Träger. Insbesondere ist der Träger dauerhaft durch Adhäsion angebunden.

Die genannte Aufgabe wird des Weiteren erfindungsgemäß gelöst durch einen Pressformling für ein Bauteil aus einem Faserverbundwerkstoff, wie er sich insbesondere nach einer Anzahl von Teilschritten gemäß dem vorbeschriebenen Verfahren ergibt. Ein solcher Pressformling umfasst einen Träger mit einer Anzahl von Kavitäten und ein trockenes Fasermaterial, wobei das trockene Fasermaterial dem Träger aufgebracht ist, und wobei wenigstens eine Teilanzahl der Kavitäten des Trägers mit flüssigem Harz gefüllt ist.

Ein derartiger Pressformling stellt ein gegenüber äußeren Einflüssen vergleichsweise stabiles, handhab- und transportierbares Halbzeug dar, welches in einem einzigen Pressvorgang ohne zusätzliche Arbeitsschritte oder Zusatzstoffe tränk- bzw. imprägnier- und aushärtbar ist. Insbesondere ein formstabiler und/oder endkonturnah geformter Träger erlaubt eine vereinfachte automatisierte Handhabung sowie Positionierung. Das flüssige Harz ist derart gespeichert, dass keinerlei Verunreinigungen der Umgebung sowie des gespeicherten Harzes selbst während der Handhabung auftreten. Insbesondere ist ein unerwünschtes Aushärten bis zur Verpressung vermieden. Diese Eigenschaften führen zu einem erheblichen logistischen Vorteil beim Durchführen der zur Herstellung des fertigen Bauteils erforderlichen Prozesskette.

Der Pressformling wird in seiner Gesamtheit in eine Pressenkavität eingelegt. Durch das Schließen des Werkzeugs wird zunehmend Druck auf den Vorformling ausgeübt. Die mit flüssigem Harz gefüllten Kavitäten werden hierdurch zunehmend komprimiert und geben schließlich das Harz des Matrixmaterials frei. Das freigewordene flüssige Harz fließt durch den zunehmenden Druck in das trockene Fasermaterial des Pressformlings und durchtränkt dieses. Die Fließrichtung ist hierbei im Wesentlichen parallel zur Dickenrichtung des Pressformlings. Die Tränkung des Fasermaterials wird solange fortgesetzt, bis die Endbauteildicke erreicht und der Pressenhub abgeschlossen ist. Spätestens zu diesem Zeitpunkt sind die Kavitäten des Trägers kollabiert und haben das gespeicherte Harz an das Bauteil abgegeben. In diesem Zustand wird das nun verpresste, getränkte Bauteil unter Druck und Wärmeeinwirkung durch die Pressenkavitäten vollständig ausgehärtet.

Im Gegensatz zu einem herkömmlichen Nasspressen fließt das flüssige Harz entgegen der Schwerkraft von der Bauteilunterseite zur Bauteiloberseite, ohne dass Harz bereits vor der Verpressung in das trockene Fasermaterial eindringt. Hierdurch wird eine homogene Fließfront des flüssigen Harzes sichergestellt. Darüber hinaus kann im Pressformling enthaltenes Gas durch Evakuieren der Pressenkavität nach deren luftdichten Schließung, jedoch noch vor dem Kompaktieren des Pressformlings, aus dem Pressenraum und aus dem Bauteil entfernt werden.

Im Vergleich zu einem herkömmlichen RTM-Verfahren sind zum Aushärten sehr viel höhere Prozesstemperaturen vorstellbar. Das flüssige Harz wird erst relativ spät erhitzt, wobei die Vernetzungsreaktion schlagartig ausgelöst werden kann.

Im Ergebnis kann durch das vorbeschriebene Herstellungsverfahren ein Strukturbauteil aus einem Faserverbundwerkstoff erzeugt werden, welches vergleichbare Festigkeiten und Qualitäten aufweist wie ein im RTM-Verfahren hergestelltes Bauteil, dessen Herstellung jedoch deutlich kostengünstiger ist.

Von der Erfindung eigenständig umfasst ist auch eine Oberflächenschicht für ein vorgenannt herzustellendes Bauteil, die einen vorbeschriebenen Träger, insbesondere mit eingebrachten Makrokavitäten, oder eine Kombination aus einem derartigen Träger und dem eingesetzten bzw. eingefüllten Harz umfasst. Die eingesetzten Harzsysteme und die eingesetzten Trägermaterialien sind dabei zur Erzeugung der physikalischen, chemischen, elektrischen, rheologischen, thermischen, visuellen, haptischen und/oder akustischen Eigenschaften am fertigen Bauteil optimiert bzw. ausgewählt.

Ausführungsbeispiele der Erfindung werden anhand einer Zeichnung näher erläutert. Dabei zeigen jeweils schematisch
- Fig. 1:: ein Herstellungsverfahren für ein Bauteil aus einem Faserverbundwerkstoff unter Verwendung eines Trägers mit Kavitäten gemäß einer ersten Variante und
- Fig. 2:: ein Herstellungsverfahren für ein Bauteil aus einem Faserverbundwerkstoff unter Verwendung eines Trägers mit Kavitäten gemäß einer zweiten Variante.

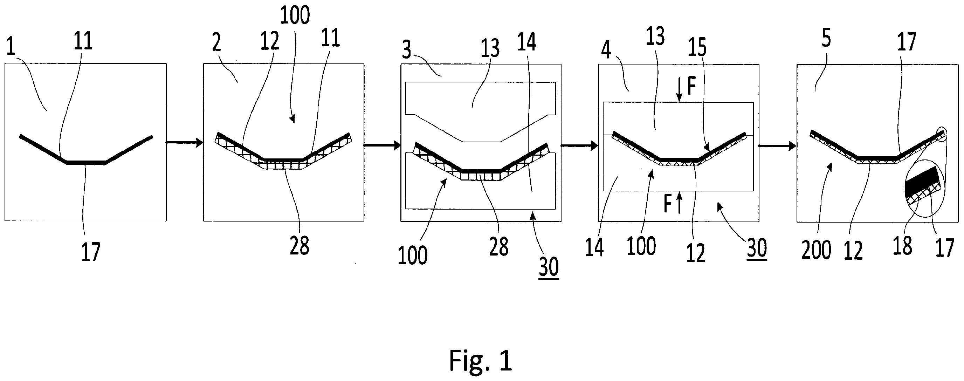

Entsprechend Fig. 1, Grafik 1 wird ein bereits endkonturnah konfektionierter, unkompaktierter Vorformling 11 aus einem Fasermaterial 17 bereitgestellt. Das Fasermaterial 17 umfasst hierbei eine Anzahl von geschichteten Faserlagen, die untereinander fixiert sind. Der Vorformling 11 ist insofern transportstabil.

Entsprechend Fig. 1, Grafik 2 wird der endkonturnah konfektionierte Vorformling 11 einem ebenfalls endkonturnah konfektionierten Träger 12 aufgelegt. Der Träger 12 umfasst eine Anzahl von Kavitäten 28, die mit einem flüssigen Harz eines Matrixwerkstoffs befüllt sind. Vorformling 11 und Träger 12 bilden zusammen einen transportstabilen Pressformling 100, der zur Umformung entsprechend Fig. 1, Grafik 3 in eine untere, beheizbare Werkzeugkavität 14 einer Presse 30 eingelegt wird. Die obere beheizbare Werkzeugkavität 13 weist hierbei eine ausreichende Distanz zur unteren Werkzeugkavität 14 auf, die Presse 30 ist demnach geöffnet.

Anschließend wird entsprechend Fig. 1, Grafik 4 die Presse 30 geschlossen, wobei die beiden Werkzeugkavitäten 13, 14 eine luftdichte Bauteilkavität bilden, aus der Luft abgesaugt wird, der Pressformling 100 jedoch noch nicht komprimiert wird. Anschließend wird der Pressvorgang nach dem kompletten Schließen der Werkzeugkavitäten 13, 14 durchgeführt. Dabei kollabieren die Kavitäten 28 des mit flüssigem Harz befüllten Trägers 12 und geben das Harz in die Bauteilkavität der Presse 30 ab. Hierbei tränkt das flüssige Harz das Fasermaterial 17, so dass zunächst ein vollständig mit dem Harz imprägniertes, nasses Bauteil 15 entsteht, an dessen unterer Oberfläche sich der komprimierte, ebenfalls vollständig oder teilweise mit Harz getränkte Träger 12 befindet. In dem komprimierten Träger 12 sind die Kavitäten 28 vollständig kollabiert. Insgesamt härtet der kompaktierte Pressformling 100 in diesem Zustand unter Druck und Temperatureinfluss durch die umgebenden Werkzeugkavitäten 13, 14 aus.

In Fig. 1, Grafik 5 ist das resultierende, ausgehärtete Bauteil 200 nach dessen Entformung aus den Werkzeugkavitäten 13, 14 dargestellt. Das fertige Bauteil 200 umfasst das in die ausgehärtete Matrix eingebettete Fasermaterial 17 sowie den sich darauf als Oberfläche 18 angebundenen Träger 12, der komprimiert und vollständig oder teilweise mit ausgehärteter Matrix imprägniert ist. Die Oberflächeneigenschaften des fertigen Bauteils 200 hängen von dem für den Träger 12 eingesetzten Trägermaterial und dem eingesetzten Matrixmaterial ab.

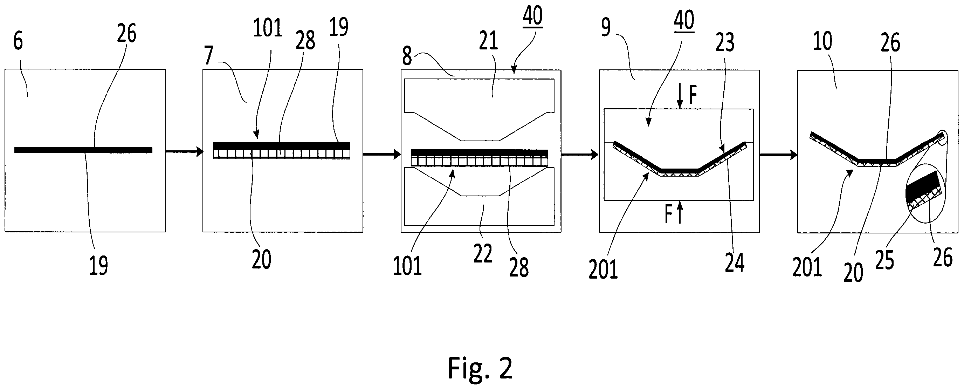

Entsprechend Fig. 2, Grafik 6 wird ein unkonfektionierter und unkompaktierter Vorformling 19 bereitgestellt, der lose geschichtete Faserlagen umfasst. Mit anderen Worten besteht der Vorformling 19 im Wesentlichen aus losem Fasermaterial 26.

Entsprechend Fig. 2, Grafik 7 wird der lose Vorformling 19 auf einem ebenfalls noch nicht endkonturnah konfektionierten Träger 20 platziert. Der Träger 20 umfasst wiederum eine Anzahl von Kavitäten 28, die mit einem flüssigen Harz eines Matrixmaterials befüllt sind. Träger 20 und aufgebrachter Vorformling 19 stellen gemeinsam einen Pressformling 101 dar, der zu den weiteren Verfahrensschritten verbracht wird.

Gemäß Fig. 2, Grafik 8 wird der Pressformling 101 bei geöffneter Presse 40 einer unteren Werkzeugkavität 22 aufgelegt. Die Form des Pressformlings 101 entspricht hierbei nicht der Form der Werkzeugkavität 22. Entsprechend liegt der Pressformling 101 nicht an jedem Punkt seiner Unterseite auf der unteren Werkzeugkavität 22 auf. Während des Schließens der Presse 40 wird der lose Pressformling 101 gemäß der sich nähernden Werkzeugkavitäten 21, 22 deformiert, so dass er sich an die Werkzeugkavitäten 21, 22 anschmiegt. Gaseinschlüsse, die sich noch in der luftdichten Kavität, die aus der unteren und oberen Werkzeugkavität 21,22 ab einem bestimmten Zeitpunkt während des Schließens der Presse 40 gebildet wird, befinden, werden vor, während oder nach der Deformation des Pressformlings 101 abgesaugt. Nach Abschluss der Deformation des Pressformlings 101 schließt sich die Presse 40 weiter, so dass der Pressformling nun unter Kollabieren der Kavitäten komprimiert wird.

In Fig. 2, Grafik 9 ist der Endzustand nach dem kompletten Schließen der Werkzeugkavitäten 21, 22 dargestellt. Unter dem Druck der Werkzeughälften kollabieren die Kavitäten 28 in dem Träger 20, wobei das flüssige Harz an die Bauteilkavität abgegeben wird. Das flüssige Harz tränkt das Fasermaterial 26, so dass ein vollständig mit dem Matrixmaterial imprägniertes, nasses und nun endkonturnahes Bauteil 23 geschaffen wird. Die Kavitäten 28 im Träger 20 sind vollständig kollabiert.

In dem geschlossenen Zustand der Presse 40 härtet das Bauteil 23 unter Druck und Temperatureinfluss durch die umgebenden Werkzeugkavitäten 21, 22 zum fertigen Bauteil 201 aus.

In Fig. 2, Grafik 10 ist das ausgehärtete Bauteil 201 dargestellt. Das Bauteil 201 umfasst das in die ausgehärtete Matrix eingebettete Fasermaterial 26 sowie den als Oberfläche 25 angebundenen Träger 20, der komprimiert und vollständig oder teilweise mit ausgehärtetem Matrixmaterial imprägniert ist. Der Träger 20 ist mechanisch fest mit dem Fasermaterial 26 verbunden. Die Oberflächeneigenschaften des Bauteils 201 sind von dem eingesetzten Trägermaterial und dem eingesetzten Matrixmaterial abhängig.

In dem in Fig. 2 dargestellten Verfahren kann loses Fasermaterial verwendet werden. Während des Umformprozesses, auch "Drapieren" genannt, können somit die Lagen des Fasermaterials aufeinander abgleiten und sich dadurch besser an die Werkzeugkavitäten 21, 22 anlegen. Das auf dem Träger 20 liegende lose Fasermaterial 26 wird durch den Träger 20 selbst stabilisiert, so dass es transport- und handhabefähig ist.

Insbesondere wird für den Träger 12, 20 ein Material verwendet, das sich sehr einfach verformen lässt. Das eingesetzte Material weist jedoch zugleich eine zum Tragen des Fasermaterials 17, 26 und zum Speichern des flüssigen Harzes notwendige Steifigkeit und Festigkeit auf. Als Material für den Träger 12, 20 kann insbesondere ein Papier verwendet werden. Weiterhin ist es möglich, den faserbasierten Träger (insbesondere aus Papier) mit anderen Materialien wie zum Beispiel mit Metallen, Kunststoffen oder Keramiken zu unterstützen. Der Träger kann auch aus einer oder mehreren Lagen, insbesondere Papierlagen, bestehen, wobei die Kavitäten durch eine einzelne Lage oder durch die Fügung von mehreren Lagen hergestellt werden.

Als Material des Trägers kann insbesondere ein Spezialpapier verwendet werden, dessen Eigenschaften vorteilig für die Prozessführung, die Bauteileigenschaften, die Bauteilentsorgung etc. ist. Das Spezialpapier kann insbesondere derart ausgewählt sein, dass durch die Prozessierung mit einem bestimmten Harzsystem isolierende Wirkungen hinsichtlich elektrischen Stroms, Umgebungsmedien oder Wärme/Kälte, tribologische Eigenschaften der betreffenden Oberfläche, zum Beispiel durch Keramikpartikel, oder vorab bedruckte Dokumentationen, die später sichtbar sind, erzeugt werden, das Bauteil brandgeschützt ausgeführt ist (zum Beispiel mittels Nomex-Papier mit Phenolharz) oder eine Kombination aus den vorherig genannten Eigenschaften erreicht wird.

### Bezugszeichenliste

- 1 - 5: Grafiken Fig. 1
- 6 - 10: Grafiken Fig. 2
- 11: Vorformling
- 12: Träger
- 13: obere Werkzeugkavität
- 14: untere Werkzeugkavität
- 15: Bauteil, nass
- 17: Fasermaterial
- 18: Oberfläche
- 19: Vorformling
- 20: Träger
- 21: obere Werkzeugkavität
- 22: untere Werkzeugkavität
- 23: Bauteil, nass
- 25: Oberfläche
- 26: Fasermaterial
- 28: Kavitäten
- 30: Presse
- 40: Presse
- 100: Pressformling
- 101: Pressformling
- 200: Bauteil
- 201: Bauteil

## Patentansprüche

1. Verfahren zum Herstellen eines Bauteils (200, 201) aus einem Faserverbundwerkstoff wobei
- einem Träger (12, 20) lokal eine Mehrzahl von Kavitäten (28) dadurch an- und/oder eingeformt werden, dass diese in den Träger (12, 20) eingesenkt oder eingepresst werden, oder dass der Träger (12, 20) gefaltet, gewellt oder gebogen wird,
- ein flüssiges Harz in die Kavitäten (28) des Trägers (12, 20) eingebracht wird,
- dem Träger (12, 20) unter Ausbildung eines Pressformlings (100, 101) ein trockenes Fasermaterial (17, 26) aufgebracht wird,
- der das Fasermaterial (17, 26) und den Träger (12, 20) umfassende Pressformling (100, 101) unter Druckeinwirkung umgeformt wird,
- die Kavitäten (28) des Trägers (12, 20) infolge der Druckeinwirkung kollabieren und das flüssige Harz unter Tränkung des Fasermaterials (17, 26) freisetzen,
- der Pressformling (101, 101) mit dem getränkten Fasermaterial (17, 26) zu dem fertigen Bauteil (200, 201) ausgehärtet wird, wobei sich der Träger (12, 20) dauerhaft mit dem Fasermaterial (17, 26) verbindet.

2. Verfahren nach Anspruch 1,
wobei die an- und/oder eingeformten Kavitäten des verwendeten Trägers (12, 20) Makrokavitäten sind, in denen das flüssige Harz insbesondere durch Gravitation gespeichert wird.

3. Verfahren nach Anspruch 1 oder 2,
wobei die geometrische Form der Kavitäten des verwendeten Trägers (12, 20) auf ein gewünschtes Fließverhalten des flüssigen Harzes während des Tränkungsprozesses eingestellt wird.

4. Verfahren nach einem der Ansprüche 1 bis 3,
wobei die an- und/oder eingeformten Kavitäten des verwendeten Trägers (12, 20) wenigstens in einer Ausbreitungsrichtung des Trägers (12, 20) geschlossen sind, so dass das flüssige Harz darin in Position und Form gespeichert ist.

5. Verfahren nach einem der Ansprüche 1 bis 4,
wobei ein Träger (12, 20) aus einem mit dem flüssigen Harz tränkbaren Material verwendet wird.

6. Verfahren nach einem der vorhergehenden Ansprüche,
wobei als ein Material für den Träger (12, 20) ein Thermoplast, ein Papier, ein Gewebe, ein Gewirke, ein Gestricke, ein Vlies, ein Schwamm und/oder eine Kombination aus diesen Stoffen verwendet wird.

7. Verfahren nach einem der vorhergehenden Ansprüche,
wobei für den Träger (12, 20) eine Kombination aus einem faserbasierten Material und einem faserfreien Material verwendet wird.

8. Verfahren nach einem der vorhergehenden Ansprüche,
wobei ein endkonturnah geformter Träger (12, 20) verwendet wird.

9. Verfahren nach einem der vorhergehenden Ansprüche,
wobei das Fasermaterial (17, 26) dem Träger (12, 20) unter Erhalt eines trägerseitigen Randüberstands aufgebracht wird, der zu einer Positionierung des Pressformlings (100, 101) und/oder als Dichtelement während der Druckeinwirkung eingesetzt wird.

10. Verfahren nach einem der vorhergehenden Ansprüche,
wobei auf den Träger (12, 20), insbesondere nach dem Befüllen der Kavitäten (28), eine harzundurchlässige Grenzschicht, ein Haftvermittler, Hilfsstoffe und/oder Füllstoffe aufgebracht werden.

11. Verfahren nach einem der vorhergehenden Ansprüche,
wobei das trockene Fasermaterial (17, 26) in Form von Lagen auf den Träger aufgebracht wird.

12. Verfahren nach einem der vorhergehenden Ansprüche,
wobei das trockene Fasermaterial (17, 26) zueinander und/oder auf dem Träger (12, 20) fixiert wird.

13. Verfahren nach einem der vorhergehenden Ansprüche,
wobei die Kavitäten (28) des Trägers (12, 20) mit verschiedenen Harzen befüllt werden.

14. Verfahren nach einem der vorhergehenden Ansprüche,
wobei der Träger (12, 20) als äußere Oberfläche (18, 25) dem Fasermaterial (17, 26) beim Aushärten dauerhaft durch Adhäsion angebunden wird.

15. Pressformling (100, 101) für ein Bauteil (200, 201) aus einem Faserverbundwerkstoff, insbesondere wie er sich nach einer Anzahl von Teilschritten gemäß einem der Ansprüche 1 bis 14 ergibt, umfassend einen Träger (12, 20) mit einer Mehrzahl von lokal an- und/oder eingeformten Kavitäten (28), die in den Träger (12, 20) eingesenkt oder eingepresst sind, oder zu deren Bildung der Träger (12, 20) gefaltet, gewellt oder gebogen ist, und ein trockenes Fasermaterial (17, 26), wobei das trockene Fasermaterial (17, 26) dem Träger (12, 20) aufgebracht ist, und wobei wenigstens eine Teilanzahl der Kavitäten (28) des Trägers (12, 20) mit flüssigem Harz gefüllt ist.

## Claims

1. Method for producing a component (200, 201) from a fibre-composite material, wherein
- a plurality of cavities (28) are moulded locally on and/or in a support (12, 20) in that said cavities (28) are indented or impressed in the support (12, 20), or in that the support (12, 20) is folded, corrugated, or bent;
- a liquid resin is incorporated in the cavities (28) of the support (12, 20);
- a dry fibrous material (17, 26) is applied to the support (12, 20), while configuring a press-moulded blank (100, 101);
- the press-moulded blank (100, 101) that comprises the fibrous material (17, 26) and the support (12, 20) is formed under the influence of pressure;
- the cavities (28) of the support (12, 20), as a consequence of the influence of pressure, collapse and release the liquid resin, while impregnating the fibrous material (17, 26);
- the press-moulded blank (101, 101) having the impregnated fibrous material (17, 26) is cured so as to form the finished component (200, 201), wherein the support (12, 20) connects permanently to the fibrous material (17, 26).

2. Method according to Claim 1,
wherein the cavities that are moulded on and/or in the support (12, 20) used are macrocavities in which the liquid resin is stored in particular by way of gravitation.

3. Method according to Claim 1 or 2,
wherein the geometric shape of the cavities of the support (12, 20) used is set to a desired flow behaviour of the liquid resin during the impregnation process.

4. Method according to one of Claims 1 to 3,
wherein the cavities that are moulded on and/or in the support (12, 20) used are closed in at least one direction of extent of the support (12, 20) such that the liquid resin therein is stored in terms of position and shape.

5. Method according to one of Claims 1 to 4,
wherein a support (12, 20) from a material that is capable of being impregnated with the liquid resin is used.

6. Method according to one of the preceding claims, wherein a thermoplastics, a paper, a woven fabric, a warp and/or weft knitted fabric, a circular and/or flat knitted fabric, a non-woven, a sponge, and/or a combination of these materials is used as a material for the support (12, 20).

7. Method according to one of the preceding claims, wherein a combination of a fibre-based material and a fibre-free material is used for the support (12, 20).

8. Method according to one of the preceding claims, wherein a support (12, 20) that is shaped to the approximate final contour is used.

9. Method according to one of the preceding claims, wherein the fibrous material (17, 26) is applied to the support (12, 20) while preserving a peripheral projection on the support, said peripheral projection being employed for positioning the press-moulded blank (100, 101) and/or as a sealing element while under the influence of pressure.

10. Method according to one of the preceding claims, wherein a resin-impermeable barrier layer, a bonding agent, additives, and/or fillers are applied to the support (12, 20), in particular once the cavities (28) have been filled.

11. Method according to one of the preceding claims, wherein the dry fibrous material (17 26) is applied to the support in the form of tiers.

12. Method according to one of the preceding claims, wherein the dry fibrous material (17, 26) is inherently affixed and/or is affixed to the support (12, 20).

13. Method according to one of the preceding claims, wherein the cavities (28) of the support (12, 20) are filled with dissimilar resins.

14. Method according to one of the preceding claims, wherein the support (12, 20) as an external surface (18, 25) during curing is bonded to the fibrous material (17, 26) in a permanent manner by way of adhesion.

15. Press-moulded blank (100, 101) for a component (200, 201) from a fibre-composite material, in particular as results from a number of part-steps according to one of Claims 1 to 14, said press-moulded blank (100, 101) comprising a support (12, 20) having a plurality of cavities (28) that are moulded locally on and/or in the support (12, 20) and that are indented or impressed in the support (12, 20), or the support (12, 20) for the formation of said cavities (28) being folded, corrugated, or bent, and having a dry fibrous material (17, 26), wherein the dry fibrous material (17, 26) is applied to the support (12, 20), and wherein at least a ratio of the cavities (28) of the support (12, 20) is filled with liquid resin.

## Revendications

1. Procédé de fabrication d'un composant (200, 201) à partir d'un matériau composite renforcé par des fibres, dans lequel
- on forme localement sur et/ou dans un support (12, 20) une multiplicité de cavités (28), par le fait que celles-ci sont estampées ou enfoncées dans le support (12, 20) ou que le support (12, 20) est plié, ondulé ou cintré,
- on introduit une résine liquide dans les cavités (28) du support (12, 20),
- on applique au support (12, 20) un matériau fibreux sec (17, 26) avec formation d'une ébauche de moulage à la presse (100, 101),
- on déforme l'ébauche de moulage à la presse (100, 101) contenant le matériau fibreux (17, 26) et le support (12, 20) sous l'action d'une pression,
- les cavités (28) du support (12, 20) s'écrasent sous l'action de la pression et libèrent la résine liquide en imprégnant le matériau fibreux (17, 26),
- on laisse durcir l'ébauche de moulage à la presse (101, 101) avec le matériau fibreux imprégné (17, 26) pour obtenir le composant terminé (200, 201), dans lequel le support (12, 20) se lie durablement au matériau fibreux (17, 26).

2. Procédé selon la revendication 1, dans lequel les cavités formées sur et/ou dans le support utilisé (12, 20) sont des macrocavités, dans lesquelles la résine liquide est accumulée en particulier par gravité.

3. Procédé selon la revendication 1 ou 2, dans lequel on règle la forme géométrique du support utilisé (12, 20) à un comportement d'écoulement désiré de la résine liquide pendant le processus d'imprégnation.

4. Procédé selon l'une quelconque des revendications 1 à 3, dans lequel les cavités formées sur et/ou dans le support utilisé (12, 20) sont fermées au moins dans une direction d'extension du support (12, 20), de telle manière que la résine liquide soit accumulée dans celles-ci en position et en forme.

5. Procédé selon l'une quelconque des revendications 1 à 4, dans lequel on utilise un support (12, 20) en un matériau pouvant être imprégné avec la résine liquide.

6. Procédé selon l'une quelconque des revendications précédentes, dans lequel on utilise comme matériau pour le support (12, 20) un thermoplastique, un papier, un tissu, un tissu tricoté, un tissu à mailles, un non-tissé, une mousse et/ou une combinaison de ces substances.

7. Procédé selon l'une quelconque des revendications précédentes, dans lequel on utilise pour le support (12, 20) une combinaison d'un matériau à base de fibres et d'un matériau sans fibres.

8. Procédé selon l'une quelconque des revendications précédentes, dans lequel on utilise un support (12, 20) de forme proche du contour final.

9. Procédé selon l'une quelconque des revendications précédentes, dans lequel on dépose le matériau fibreux (17, 26) sur le support (12, 20) avec obtention d'un dépassement de bord côté support, que l'on utilise pour un positionnement de l'ébauche de moulage à la presse (100, 101) et/ou comme élément d'étanchéité pendant l'action de la pression.

10. Procédé selon l'une quelconque des revendications précédentes, dans lequel on dépose sur le support (12, 20), en particulier après le remplissage des cavités (28), une couche limite imperméable à la résine, un agent adhésif, des adjuvants et/ou des charges.

11. Procédé selon l'une quelconque des revendications précédentes, dans lequel on dépose le matériau fibreux sec (17, 26) sous la forme de couches sur le support.

12. Procédé selon l'une quelconque des revendications précédentes, dans lequel on fixe le matériau fibreux sec (17, 26) l'un à l'autre et/ou sur le support (12, 20).

13. Procédé selon l'une quelconque des revendications précédentes, dans lequel on remplit les cavités (28) du support (12, 20) avec des résines différentes.

14. Procédé selon l'une quelconque des revendications précédentes, dans lequel on lie durablement le support (12, 20) comme surface extérieure (18, 25) par adhérence au matériau fibreux (17, 26) lors du durcissement.

15. Ebauche de moulage à la presse (100, 101) pour un composant (200, 201) en un matériau composite renforcé par des fibres, en particulier tel qu'elle résulte d'un certain nombre d'étapes partielles selon l'une quelconque des revendications 1 à 14, comprenant un support (12, 20) comportant une multiplicité de cavités (28) formées localement sur et/ou dans celui-ci, qui sont estampées ou enfoncées dans le support (12, 20), ou le support (12, 20) est plié, ondulé ou cintré pour leur formation, et un matériau fibreux sec (17, 26), dans laquelle le matériau fibreux sec (17, 26) est déposé sur le support (12, 20), et dans laquelle au moins un nombre partiel des cavités (28) du support (12, 20) sont remplies de résine liquide.
